# DEMANDE DE BREVET EUROPEEN

(11) **EP 1 527 964 A1**
(43) Date de publication de la demande: **04.05.2005**
(21) Numéro de dépôt: 04292501.6
(22) Date de dépôt: 21.10.2004
(51) Int. Cl.: B60R 21/20

(54) **Elément pourvue d'une couture déchirable permettant le déploiement d'un coussin gonflable, notamment pour siège de véhicule automobile**

(30) Priorité: 28.10.2003 FR 0312625
(71) Demandeur: Centre d'Etude et de Recherche pour l'Automobile ( CERA), 51100 Reims (FR)
(72) Inventeur: Bonte, Emmanuel, 51100 Reims (FR); Georges, Laurent, 51100 Reims (FR)
(74) Mandataire: Geismar, Thierry

(57) **Abrégé**

L'invention concerne un élément pour l'habitacle d'un véhicule automobile, dans lequel un système à coussin gonflable (3) est destiné à être logé, ledit élément (1) comprenant un corps en mousse (2) pourvu d'un logement (4) destiné à recevoir ledit système, ledit corps en mousse étant pourvu d'un revêtement (6) comprenant au moins une première (7) et une deuxième parties (8), le logement (4) étant obturé du côté externe par la deuxième partie (8), lesdites parties étant associées l'une à l'autre par une couture déchirable (9) qui est destinée, sous l'effet du déplacement de la deuxième partie qui est induit par le gonflement dudit coussin, à permettre l'ouverture du logement (4), ledit élément étant caractérisé en ce que la couture déchirable (9) est décalée par rapport à l'ouverture (10) du logement (4) et en ce qu'une couche de séparation (13) est prévue en regard de la face interne de la deuxième partie (8), ladite couche s'étendant entre le logement (4) et la couture déchirable (9), ladite couche étant fixée à la première partie (7) de sorte à maintenir l'intégrité du corps en mousse lors de l'ouverture du logement (4).

L'invention concerne également un siège de véhicule comprenant un tel élément (1).

## Description

L'invention concerne un élément pour l'habitacle d'un véhicule automobile dans lequel un système à coussin gonflable est destiné à être logé, ainsi qu'un siège de véhicule automobile comprenant un tel élément.

Les systèmes à coussin gonflable disposés dans des éléments de l'habitacle de véhicules automobiles ont pour fonction, en cas de choc, de protéger les passagers en s'interposant entre ces derniers et tout élément potentiellement dangereux de la structure du véhicule automobile.

Pour ce faire, chaque système est connecté à un dispositif de détection de choc. Au moment du choc, l'activation de ce dispositif entraîne le gonflement immédiat du coussin, et sa sortie de l'élément de l'habitacle dans lequel il était stocké à l'état plié.

Dans une application particulière, les systèmes à coussin gonflable sont destinés à protéger les passagers en cas de choc latéral. Ces systèmes peuvent être disposés dans les dossiers des sièges de véhicule automobile formés d'un corps en mousse pourvu d'un revêtement comprenant une couture agencée pour se déchirer sous l'effet du gonflement du coussin.

Toutefois, un tel agencement présente l'inconvénient que le gonflement du coussin fait non seulement éclater la couture prévue à cet effet, mais a également pour conséquence la projection de morceaux de mousse. Ces derniers, bien que légers, sont projetés à une vitesse telle qu'ils peuvent occasionner de sérieuses blessures aux occupants du véhicule, notamment aux yeux.

Pour pallier cet inconvénient, on connaît déjà des éléments de siège de véhicule automobile obtenus par moulage « in situ », et comprenant un coussin gonflable, une couche de séparation étant interposée entre le revêtement et le corps en mousse et recouvrant l'ouverture du logement prévu pour recevoir le système à coussin gonflable. Cette couche a pour fonction de préserver l'intégrité du corps en mousse lors du gonflement du coussin du fait que le revêtement n'adhère pas à la mousse. Par conséquent, celui-ci ne peut entraîner de la mousse lors de son déplacement.

Cependant, le coussin gonflable, lors de son déploiement, peut être en contact avec la mousse et provoquer son arrachement entraînant ainsi des projections dangereuses pour les occupants.

Pour remédier notamment à cet inconvénient, l'invention propose un élément de l'habitacle d'un véhicule automobile destiné à recevoir un système à coussin gonflable, permettant d'éviter toute projection de mousse lors du gonflement du coussin grâce à une couture déchirable disposée à l'écart du système de coussin gonflable et à une couche de séparation ne se déchirant pas et restant sensiblement immobile lors de ce gonflement, et ce par un agencement simple et notamment compatible avec la technique de moulage dite « in situ ».

A cet effet et selon un premier aspect, l'invention concerne un élément pour l'habitacle d'un véhicule automobile, dans lequel un système à coussin gonflable est destiné à être logé, ledit élément comprenant un corps en mousse pourvu d'un logement destiné à recevoir ledit système, ledit corps en mousse étant pourvu d'un revêtement comprenant au moins une première et une deuxième parties, le logement étant obturé du côté externe par la deuxième partie, lesdites parties étant associées l'une à l'autre par une couture déchirable qui est destinée, sous l'effet du déplacement de la deuxième partie qui est induit par le gonflement dudit coussin, à permettre l'ouverture du logement, ledit élément étant caractérisé en ce que la couture déchirable est décalée par rapport à l'ouverture du logement et en ce qu'une couche de séparation est prévue en regard de la face interne de la deuxième partie, ladite couche s'étendant entre le logement et la couture déchirable, ladite couche étant fixée à la première partie de sorte à maintenir l'intégrité du corps en mousse lors de l'ouverture du logement.

Cette couture déchirable décalée présente l'avantage de pouvoir être disposée au niveau d'une couture de confection de l'élément, de telle sorte que les passagers ne peuvent pas la distinguer par rapport aux autres coutures de confection présentes. Ainsi, la localisation du système à coussin gonflable n'est pas identifiable par les occupants du véhicule, ce qui permet d'éviter notamment des gestes malencontreux pouvant détériorer ledit système. En outre, l'élément présente alors une meilleure esthétique.

Selon un deuxième aspect, l'invention concerne un siège de véhicule automobile, comprenant une assise et un dossier, le dossier comprenant un élément tel que décrit ci-dessus, dans le logement duquel un système de coussin gonflable est logé.

D'autres objets et avantages de l'invention apparaîtront au cours de la description qui suit, faite en référence aux dessins annexés dans lesquels :
- la figure 1a est une vue schématique en coupe partielle d'un élément selon l'invention monté sur une armature de siège de véhicule automobile, dans lequel le système à coussin gonflable est stocké à l'état plié, selon un premier mode de réalisation ;
- la figure 1b est vue schématique de l'élément de la figure 1a lorsque le coussin gonflable est déployé ;
- la figure 2a est une vue schématique en coupe partielle d'un élément selon l'invention monté sur une armature de siège de véhicule automobile, dans lequel le système à coussin gonflable est stocké à l'état plié, selon un deuxième mode de réalisation ;
- la figure 2b est une vue schématique de l'élément de la figure 2a lorsque le coussin gonflable est déployé ;
- la figure 3a est une vue schématique en coupe partielle d'un élément selon l'invention monté sur une armature de siège de véhicule automobile, dans lequel le système à coussin gonflable est stocké à l'état plié, selon un troisième mode de réalisation ;
- la figure 3b est une vue schématique de l'élément de la figure 3a lorsque le coussin gonflable est déployé ;
- la figure 4a est une vue schématique en coupe partielle d'un élément selon l'invention monté sur une armature de siège de véhicule automobile, dans lequel le système à coussin gonflable est stocké à l'état plié, selon un quatrième mode de réalisation ;
- la figure 4b est une vue schématique de l'élément de la figure 4a lorsque le coussin gonflable est déployé.

L'élément de l'habitacle d'un véhicule automobile selon l'invention a pour fonction de loger un système à coussin gonflable et de permettre le déploiement du coussin gonflable de sorte à assurer la sécurité des passagers d'un véhicule automobile.

Comme représenté sur les figures, l'élément 1 comprend de façon générale un corps en mousse 2, et est prévu pour recevoir un système à coussin gonflable 3 disposé dans un logement 4 du corps en mousse 2 prévu à cet effet, ledit élément permettant le déploiement du coussin gonflable.

Dans les modes de réalisation représentés, cet élément 1 forme le dossier d'un siège de véhicule automobile et est monté sur l'armature du siège. Dans la suite de la description, on désignera par « externes » les zones tournées vers l'habitacle du véhicule, et par « internes » les zones tournées vers l'intérieur du siège.

Le système à coussin gonflable 3 comprend typiquement un coussin gonflable et des moyens de déclenchement du gonflement dudit coussin ainsi qu'un boîtier 5 dans lequel le coussin gonflable et les moyens de déclenchement du gonflement sont logés.

Le corps en mousse 2 est pourvu d'un revêtement 6 formé d'au moins une première 7 et d'une deuxième 8 parties associées l'une à l'autre par une couture déchirable 9.

L'ouverture 10 du logement 4, débouchante vers l'extérieur de l'élément 1, est obturée par la deuxième partie 8 et la couture déchirable 9 est apte à permettre l'ouverture du logement 4 et la libération du coussin gonflable en entraînant le déplacement de la deuxième partie 8, comme cela sera expliqué plus loin.

Selon les modes de réalisation représentés, la couture déchirable 9 est une couture de moindre résistance, appelée couture fusible. Cette couture est décalée par rapport à l'ouverture 10 du logement de sorte que la deuxième partie 8 obture intégralement l'ouverture 10 du logement.

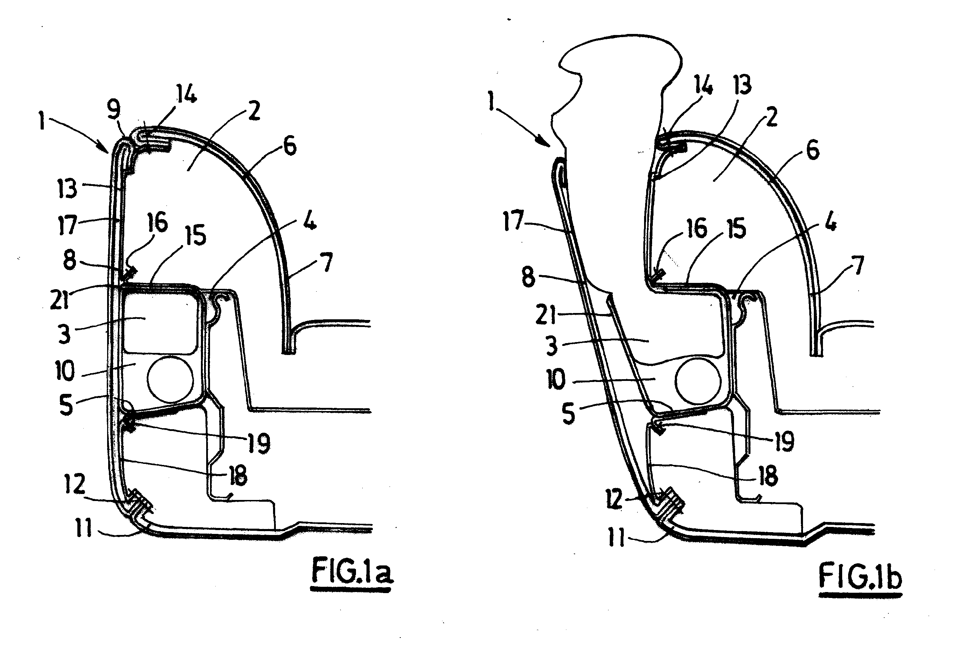

Comme représenté sur les figures, le revêtement 6 peut en outre comprendre une troisième partie 11 associée à la deuxième partie 8 par une couture résistante 12. Par couture résistante, on entend une couture qui résiste au déploiement du coussin gonflable de sorte que la couture 12 permet à la deuxième 8 et à la troisième 11 parties de rester associées l'une à l'autre lors du déploiement du coussin comme on peut le voir sur la figure 1a par exemple.

La couture 12 est située du côté opposé à la couture déchirable 9 sur la deuxième partie 8 de sorte que cette partie 8 est articulée de façon mobile sur la couture 12 lors du déchirement de la couture déchirable 9.

Les première, deuxième et troisième parties du revêtement 6 peuvent être formées du même matériau, notamment un matériau textile. Le revêtement forme l'enveloppe du corps en mousse 2.

Selon les réalisations représentées, la deuxième partie 8 peut comprendre un complexe de rigidification 17 associé à la face interne du matériau textile. Ce complexe de rigidification permet une transmission adéquate des efforts exercés par le coussin gonflable sur la deuxième partie 8 lors de son déploiement, de sorte que ces efforts sont transmis jusqu'à la couture déchirable 9 et permettent la rupture de cette couture rapidement après le déclenchement du système à coussin gonflable 3.

Selon l'invention et comme représenté sur les figures, l'élément 1 comprend en outre un couche de séparation 13 prévue en regard de la face interne de la deuxième partie 8. La couche de séparation 13 s'étend entre le logement 4 et la couture déchirable 9 de sorte à empêcher localement le contact entre le corps en mousse 2 et la deuxième partie 8, ainsi qu'entre le corps en mousse et le coussin gonflable, lors du déploiement de ce dernier.

La couche de séparation 13 est fixée à la première partie 7 par une couture résistante 14, disposée au niveau ou au-delà de la couture déchirable 9. Ainsi lors du déploiement du coussin gonflable, la deuxième partie 8 se déplace tandis que la couche de séparation 13 reste interposée entre le coussin gonflable et le corps en mousse 2, comme représenté sur les figures 1b, 2b, 3b et 4b.

Selon une réalisation non représentée, la couche de séparation 13 peut d'autre part s'étendre en regard d'une partie d'une paroi latérale du logement 4 et être fixée entre le corps en mousse 2 et le boîtier 5 lorsque le système de coussin gonflable est inséré dans le logement 4. Par paroi latérale, on entend les parois du logement bordant l'ouverture 10 et s'étendant sensiblement perpendiculairement à celle-ci. La couche de séparation 13 a donc pour fonction de confiner la mousse entre le logement 4 et la couture déchirable 9.

Selon les réalisations représentées sur les figures, l'élément 1 peut comprendre un manchon 15 s'étendant le long d'au moins une partie des parois latérales du logement 4 entre le corps en mousse 2 et le boîtier 5 lorsque le système de coussin gonflable est inséré dans le logement 4, de sorte que le manchon enrobe le boîtier 5. Par enrober, on entend que le manchon 15 est en contact serrant contre le boîtier 5.

La couche de séparation 13 est fixée au manchon 15 par une couture 16 de sorte à confiner la mousse entre le logement 4 et la couture déchirable 9. Selon les réalisations représentées, cette couture 16 est disposée au niveau de l'ouverture 10 du logement 4.

En relation avec les figures, on décrit maintenant différents mode de réalisation de l'invention. Dans ces modes de réalisations, l'élément 1 comprend en outre une deuxième couche de séparation 18 prévue en regard de la face interne de la deuxième partie 8 entre le logement 4 et la couture résistante 12. Cette deuxième couche 18 est associée à la troisième partie du revêtement 11 par une couture résistante au niveau de la couture résistante 12. Selon une réalisation cette couture résistante est formée par la couture résistante 12.

Les couches de séparations 13 et 18 et le manchon 15 sont prévus pour adhérer au corps en mousse 2 et être étanches au passage de la mousse. A cet effet, ils peuvent être formés d'un textile revêtu d'un film adhérant au corps en mousse. Le film est disposé en regard du corps en mousse 2 et est formé par exemple à base de polyuréthanne ou d'acrylique. Un tel film permet de réaliser l'élément 1 selon la technique de moulage « in-situ » en injectant de la mousse directement sur le revêtement 6, les couches de séparation étant prévues en regard de la deuxième partie 8.

Selon un premier mode de réalisation représenté sur les figures 1a et 1b, la deuxième couche de séparation 18 est associée au manchon 15 par une couture résistante 19 au niveau de l'ouverture 10 du logement.

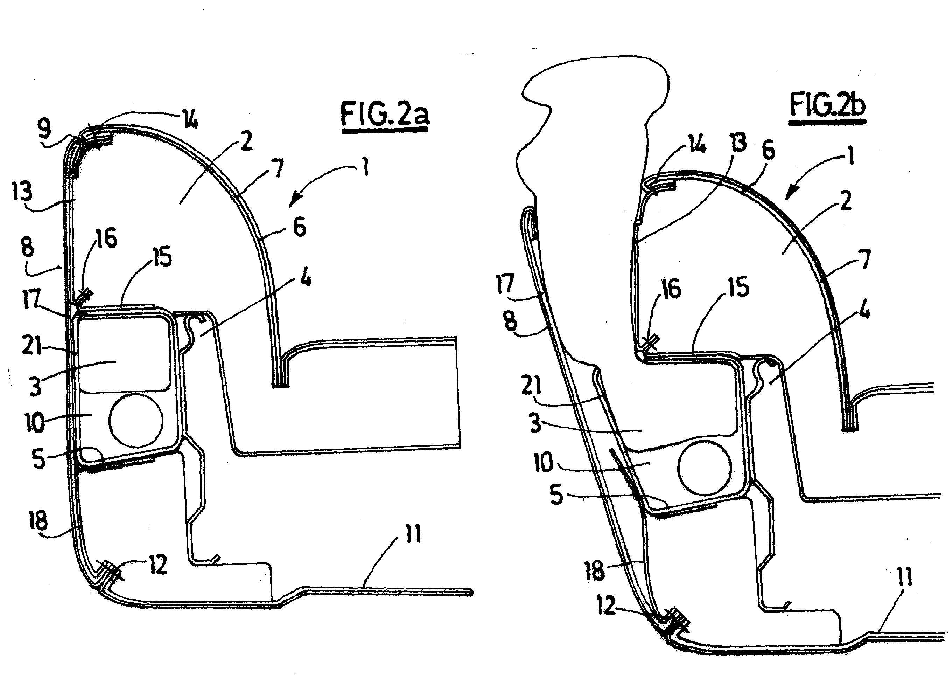

Selon un deuxième mode de réalisation représenté sur les figures 2a et 2b, la deuxième couche de séparation 18 s'étend en partie en regard de l'ouverture 10 du logement et n'est pas associée au manchon 15. On peut notamment prévoir une couche de séparation 18 s'étendant en regard de l'intégralité de l'ouverture 10 du logement.

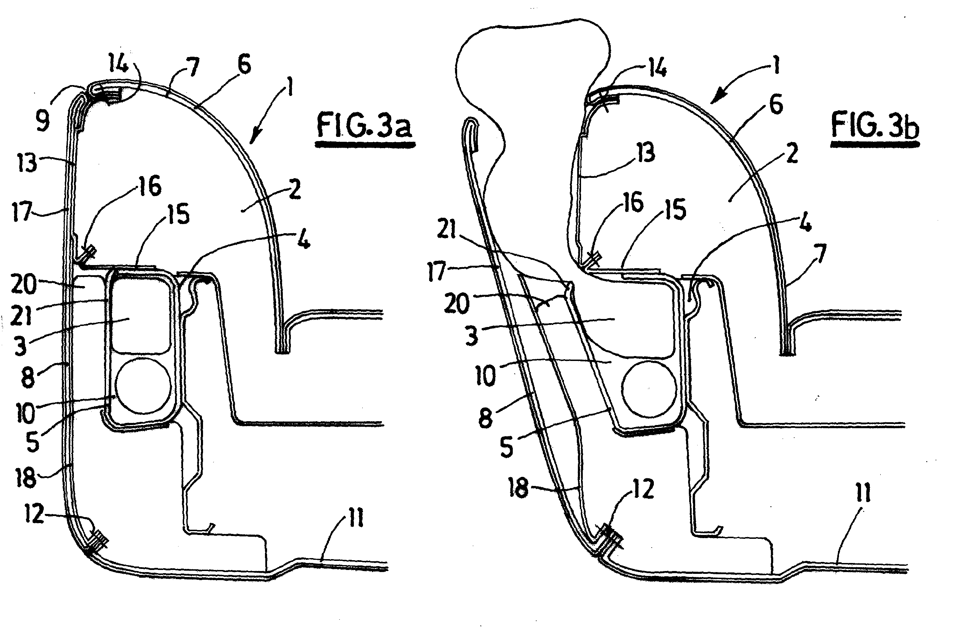

Selon les modes de réalisation représentés sur les figures 3a à 4b, une couche fine de mousse 20 peut s'étendre en regard du logement 4 entre l'ouverture 10 et la deuxième partie 8 de revêtement. La deuxième couche de séparation 18 s'étend alors sur la couche fine de mousse 20 de façon à l'isoler de la deuxième partie 8.

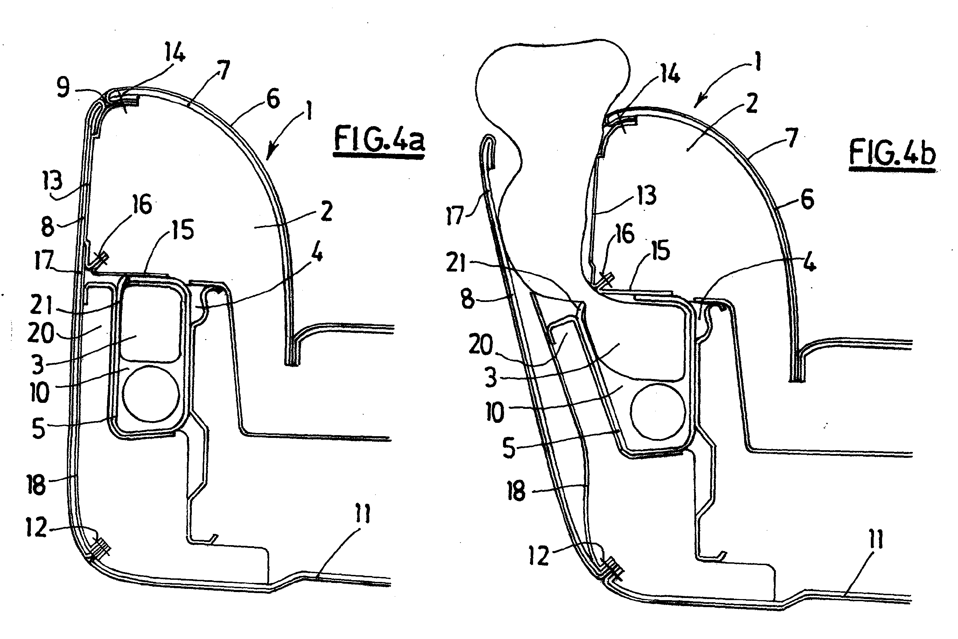

Selon le mode de réalisation représenté sur les figures 4a et 4b, le manchon 15 enrobe en partie la couche fine de mousse 20 et est disposée contre la deuxième couche de séparation 18 de sorte que l'intégralité de cette couche fine soit revêtue, soit par le manchon soit par la deuxième couche de séparation.

On décrit à présent un siège de véhicule automobile. Ce siège comprend une assise et un dossier et le dossier comprend un élément 1 tel que décrit ci-dessus, l'élément 1 étant monté sur l'armature du siège. Le système à coussin gonflable 3 est logé dans le logement 4 de l'élément de sorte que le boîtier 5 est ajusté contre les parois latérales du logement et enrobé au moins en partie par le manchon 15. Le boîtier peut être pourvu d'un volet 21 disposé en regard d'une partie de la deuxième partie 8 du revêtement. Dans le cas où une languette de mousse 20 est prévue, cette languette peut recouvrir partiellement ou complètement le volet 21. Le volet 21 est articulé de sorte à être apte à s'ouvrir sous l'effet du gonflement du coussin et entraîner le déplacement de la deuxième partie 8.

On décrit à présent, en relation avec les figure 1b, 2b, 3b et 4b, le fonctionnement d'un tel élément 1, sous l'effet d'un choc latéral sur le véhicule.

Lorsque le dispositif de détection de choc associé au système de coussin gonflable 3 est activé, le gonflement du coussin dans le logement 4 a pour effet de déplacer le volet 21 du boîtier 5 et ainsi de déplacer simultanément la deuxième partie 8 qui obture l'ouverture 10 du logement.

Le déplacement de la deuxième partie 8 entraîne le déchirement de la couture déchirable 9. Le complexe de rigidification 17 permet de transmettre les efforts jusqu'à cette couture 9 de sorte que le déchirement de la couture se fait quasiment immédiatement après le gonflement du coussin. Le déchirement de la couture 9 permet au logement 4 de s'ouvrir.

La couche de séparation 13 est disposée entre le corps en mousse 2 et la deuxième partie 8 dans le trajet de déploiement du coussin gonflable. La couche de séparation 13 restant plaquée contre le corps en mousse 2, l'intégrité du corps en mousse est maintenue lors du déploiement du coussin gonflable. On évite ainsi les projections de mousse qui pourraient être dangereuses pour les occupants du véhicule automobile.

De plus les couches de séparations 13 et 18 ainsi que le manchon 15 permettent de protéger le corps en mousse 2 contre la chaleur dégagée lors de l'explosion des moyens de déclenchement du gonflement du coussin gonflable. On évite ainsi de dégrader le corps en mousse lorsque le système de coussin gonflable est déclenché.

L'ouverture du logement 4 permet au coussin, tout en continuant à se gonfler, d'être libéré vers l'extérieur de l'élément 1 et d'assurer ainsi sa fonction de protection.

## Revendications

1. Elément pour l'habitacle d'un véhicule automobile, dans lequel un système à coussin gonflable (3) est destiné à être logé, ledit élément (1 ) comprenant un corps en mousse (2) pourvu d'un logement (4) destiné à recevoir ledit système, ledit corps en mousse étant pourvu d'un revêtement (6) comprenant au moins une première (7) et une deuxième parties (8), le logement (4) étant obturé du côté externe par la deuxième partie (8), lesdites parties étant associées l'une à l'autre par une couture déchirable (9) qui est destinée, sous l'effet du déplacement de la deuxième partie (8) qui est induit par le gonflement dudit coussin, à permettre l'ouverture du logement (4), ledit élément étant **caractérisé en ce que** la couture déchirable (9) est décalée par rapport à l'ouverture (10) du logement (4) et **en ce qu'**une couche de séparation (13) est prévue en regard de la face interne de la deuxième partie (8), ladite couche s'étendant entre le logement (4) et la couture déchirable (9), ladite couche étant fixée à la première partie (7) de sorte à maintenir l'intégrité du corps en mousse (2) lors de l'ouverture du logement (4).

2. Elément selon la revendication 1, **caractérisé en ce que** la couche de séparation (13) est fixée à la première partie (7) par une couture résistante (14), ladite couture étant disposée au niveau ou au-delà de la couture déchirable (9).

3. Elément selon la revendication 1 ou 2, **caractérisé en ce qu'**il comprend un manchon (15), ledit manchon s'étendant le long d'au moins une partie des parois latérales du logement (4).

4. Elément selon la revendication 3, **caractérisé en ce que** la couche de séparation (13) est associée au manchon (15) au niveau de l'ouverture du logement (10).

5. Elément selon l'une quelconque des revendications 1 à 4, **caractérisé en ce que** la deuxième partie (8) comprend un complexe de rigidification (17).

6. Elément selon l'une quelconque des revendications 1 à 5, **caractérisé en ce que** le revêtement (6) comprend une troisième partie (11), ladite partie étant associée à la deuxième partie (8) par une couture résistante (12) du côté opposé à la couture déchirable (9).

7. Elément selon la revendication 6, **caractérisé en ce qu'**une deuxième couche de séparation (18) s'étend en regard de la face interne de la deuxième partie (8) entre le logement (4) et la couture résistante (12).

8. Elément selon la revendication 7, **caractérisé en ce que** la deuxième couche de séparation (18) s'étend partiellement en regard de l'ouverture (10) du logement.

9. Elément selon la revendication 7 lorsqu'elle dépend de la revendication 3, **caractérisé en ce que** la deuxième couche de séparation (18) est associée au manchon (15) au niveau de l'ouverture (10) du logement.

10. Elément selon l'une des revendications 1 à 10, **caractérisé en ce que** la ou les couches de séparation (13, 18) adhèrent au corps en mousse (2) et sont étanches au passage de la mousse.

11. Elément selon la revendication 10, **caractérisé en ce que** la ou les couches de séparation (13, 18) sont formées d'un textile revêtu d'un film adhérant au corps en mousse (2) et étanche à la mousse, ledit film étant disposé en regard dudit corps en mousse.

12. Elément selon la revendication 11, **caractérisé en ce que** le film est formé à base de polyuréthanne ou d'acrylique.

13. Siège de véhicule automobile, comprenant une assise et un dossier, **caractérisé en ce que** le dossier comprend un élément (1) selon l'une quelconque des revendications 1 à 12, dans le logement (4) duquel un système de coussin gonflable (3) est logé.

14. Siège de véhicule automobile selon la revendication 13, **caractérisé en ce que** le système de coussin gonflable (3) comprend un boîtier (5) pourvu d'un volet (21), ledit volet étant disposé en regard d'une partie de la face interne de la deuxième partie (8) du revêtement (6) et étant apte à s'ouvrir sous l'effet du gonflement du coussin de sorte à entraîner le déplacement de la deuxième partie (8).

15. Siège de véhicule automobile selon la revendication 14, **caractérisé en ce que** le boîtier (5) est ajusté contre les parois latérales du logement (4).
